# EUROPEAN PATENT APPLICATION

(11) **EP 2 998 912 A1**
(43) Date of publication of application: **23.03.2016**
(21) Application number: 14185482.8
(22) Date of filing: 19.09.2014
(51) Int. Cl.: G06Q 10/06

(54) **Method, system and web application for monitoring a manufacturing process**

(71) Applicant: Siemens Aktiengesellschaft, 80333 München (DE)
(72) Inventor: Piccazzo, Michele, 16127 Genova (IT)
(74) Representative: Maier, Daniel Oliver

(57) **Abstract**

The invention provides a method and system for monitoring a manufacturing process, comprising the following steps:
- acquiring (21), from a plant executing the process, data about the state of the plant and/or parts thereof;
- converting said data into Gantt charts (23 - 26).

The converting step includes the steps of:
- creating a HTML file (25) and sending it to browsers of the clients for rendering (26); and
- asynchronously refreshing (251) a data record including information about a current state of the monitored plant and/or part thereof.

## Description

The invention relates to a method of and a system for monitoring a manufacturing process, especially in a production facility employing a computer managed manufacturing execution system (MES).

As defined by the Manufacturing Enterprise Solutions Association (MESA International), a MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES systems usually include, in order to improve quality and process performance of manufacturing plants, are resource allocation and state, dispatching production orders, data collection/acquisition, quality management, maintenance management, performance analysis, operations/detail scheduling, document control, labor management, process management and product tracking.

For example, the Siemens Corp. offers a broad range of MES products, under its SIMATIC® product family.

Within such a product family, the SIMATIC IT Overall Equipment Effectiveness Product Option provides for the acquisition of the state and production counters of one or more pieces of equipment and for the possibility to run one or more user defined calculations. Overall Equipment Effectiveness (OEE) is a hierarchy of metrics which evaluates and indicates how effectively a manufacturing operation is utilized.

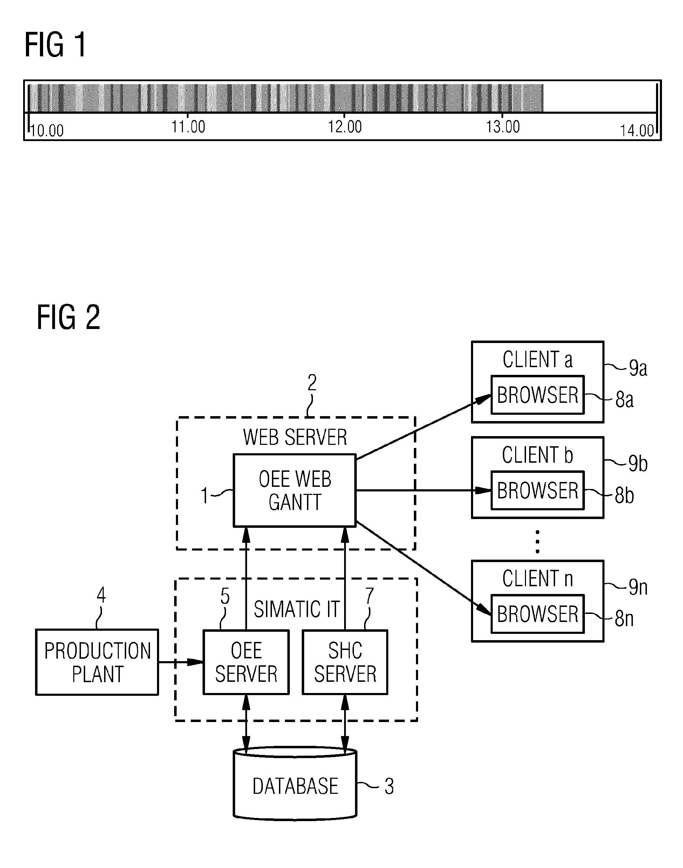

One meaningful visualization of the state of a piece of equipment is through Gantt charts, because they show all state records (information acquired while the piece of equipment is in a certain state) acquired in a time range and especially the description and the color associated with a state or a time category (group of states). Because of the color, the line operator or a supervisor in a plant can immediately understand e.g. when a piece of equipment is running or not. Other information as the name of the order currently in execution or the product actually in production can complete the analysis. An example of Gantt chart is shown in Fig. 1: the grey bands are associated with states of the time category "Production Time" (the different shades corresponding to different states of the category), the black bands with the stop times and the clear bands with states of the time category "Downtime".

It is known to visualize Gantt charts on the client machines by using web-based solutions.

A first web-based solution uses third party libraries of web controls, which render the Gantt charts as images. When the web server receives a request for Gantt chart visualization, it establishes a connection with a data source, draws a bitmap file and sends it to the client. An example of such a solution can be found at the site http://www.infragistics.com /samples/aspnet/chart/gantt-chart-data. This solution is unsatisfactory in that the request can be completed only when the image has been drawn and stored on the web server: when a great number of clients requests data for a same, relatively long time period, the number of files and the rate of request could be so high that the library is not able to satisfy the requests. Moreover, a single bitmap is drawn for all clients, whereby the rendering is not optimized in case the clients' machines have different individual display resolutions.

Another web-based solution uses ActiveX Controls installed in the client machines. As the control is instantiated in the page, it opens a connection with a data source in order to retrieve the necessary data. Such a solution has been implemented in existing versions of SIMATIC IT. This solution requires an installation per client, thereby making the system complex. Moreover, it entails a huge transfer of data between the data source, the web server and the clients, so that the problems of meeting the requests of a high number of clients exist also in this case.

It is therefore aim of the present invention to overcome the above mentioned drawbacks, by providing a method and a system for monitoring a manufacturing process that allow serving a high number of clients with good performance.

The aforementioned aim is achieved by a method for monitoring a manufacturing process comprising the following steps:
- acquiring, from a plant executing the process, data about the state of the plant and/or parts thereof;
- converting said data into one or more Gantt charts; wherein the converting step in turn includes the steps of:
- creating a HTML file and sending it to browsers of clients for rendering; and
- asynchronously refreshing, in background, a data record including information about a current state of the monitored plant and/or part thereof.

In embodiments of the invention, the converting step further includes the following features:
- compressing the text to be sent to the clients;
- caching a list of the states acquired and updating only data records concerning states occurring between an end time of the last request for a Gantt chart and an end time of the cached results.

In embodiments of the invention, the method comprises a configuration step for defining at least information items to be displayed jointly with the Gantt chart(s) and a time range to be covered by the Gantt chart(s).

In embodiments of the invention, the configuration step further includes defining a threshold for data record duration, and the converting step provides for preventing records having duration shorter than the threshold from being sent to the clients.

The invention also provides a system for implementing the method.

Furthermore, a computer program element can be provided, comprising computer program code for performing steps according to the above mentioned method when loaded in a digital processor of a computing device.

Additionally, a computer program product stored on a computer usable medium can be provided, comprising computer readable program code for causing a computing device to perform the mentioned method.

Furthermore, a web application running on a server is provided, which comprises computer program code for performing steps according to the above mentioned method when loaded in a digital processor of a computing device.

EP 2610695 discloses a method and a web application for OEE analysis in a MES system. The document is not concerned with the above mentioned problems of Gantt chart rendering.

Thus, embodiments of the invention strongly reduce the amount of data transferred to the clients and improve the response time of the system, whereby also the requests in case of more clients requesting data for a high number of hours of monitoring, by. This is obtained moreover with a simpler architecture, as no installation is to be provided on the clients.

Moreover, since the rendering is entrusted to the client browser only, embodiments of the invention allow optimizing it for each client, independently of differences in display resolutions.

The invention will now be described in preferred but not exclusive embodiments with reference to the accompanying drawings, wherein:
Figure 1, already described, is an example of Gantt chart;
Figure 2 is the software and hardware architecture of the invention;
Figures 3 and 4 show examples of pages rendered by the browser of a client; and
Figures 5 and 6 are flow charts of the method.

FIG 2 depicts the software and hardware architectures of the invention, The invention exploits a web application 1, called "OEE Web Gantt", running on a web server 2. As known, a "web application" is an application that is accessed over a network such as the Internet or an intranet (not shown). The term may also mean a computer software application that is coded in a browser-supported language (such as JavaScript, combined with a browser-rendered markup language like HTML) and is reliant on a common web browser to render the application executable. OEE Web Gantt application 1 is implemented as an ASP.NET User Control, optimized so as to increase the number of clients displaying the same data and the performance of the web server. The application runs only on the server and no installation is required on the clients' side. For the sake of clarity, reference will be made to an application operating in association with the SIMATIC IT OEE Product Option.

In Fig. 2, a database 3 stores data about the state of pieces of equipment or production lines of a plant 4. Data acquisition from plant 4 and writing of same into database 3 is managed by OEE server 5, which is part of a MES system 6 like SIMATIC IT and is known per se. The manner in which plant 4 sends the state information is well known to the skilled in the art. OEE server 5 is also entrusted with reading data from database 3 and supplying them to web server 2 when the OEE Web Gantt control (i.e. Gantt chart visualization) is requested.

Database 3 also stores working calendar information necessary in order a Gantt chart relating to a certain time range can be prepared. A further server 7, the SHC (Shift Calendar) server, also being part of SIMATIC IT system 6, reads the time range information from database 3 when the OEE Web Gantt control is requested, and then OEE server 5 reads the records relevant to that time range. The Shift Calendar is a component of SIMATIC IT managing the working calendar and the working shifts of the personnel.

The time range and state information are converted by web server 2 into a HTML file that is sent to browsers 8a, 8b...8n of requesting clients 9a, 9b...9n. The Gantt chart is thus rendered on the client machine, and web server 2 is not involved in the rendering, which can be therefore optimized for the resolution of individual clients' machines. When sending the HTML file, a compression of text is performed by web server 2, so as to reduce the data traffic over the network connecting clients 9a...9n and server 2.

The main data to be rendered by clients' browsers 8 are the color of the record (the color of the machine state or of the time category, depending on the resolution required), and the start and end time of a record. The user can also add custom fields, such as the product currently in production, the order, or other data acquired from plant 4.

The list of fields required by clients 9a...9n for each record is contained in a configuration XML (extensible Markup Language) file on web server 2.

Through the configuration file, the user can also impose filters on the record duration. This allows excluding records with duration shorter than a given threshold (e.g., microstops). The relevant data can thus be removed and are not displayed, thereby further reducing the amount of data to be transferred to clients 9.

The time range covered by a Gantt Chart can be the current shift or the last hours; in the alternative, the time range can be based on a custom field (i.e., the start time changes with the value of a custom field. The time range is defined in the configuration file. Based on the time range setting, web server 2 stores in a cache memory the list of the states and updates only the records between the end time of the last request and the end time of the cached results. In this manner, the time range is not to be calculated again at each request and the response time for all clients requesting the same time range is reduced.

Web server 2 also provides for an asynchronous refresh for updating the last record: this refresh is carried out so as to allow a high data refresh frequency while minimizing the amount of data sent to browsers 8a...8n. The asynchronous refresh is performed in background once the web page containing the Gantt has been generated and sent to clients 9. At this point, the concerned browsers 8a...8n start a timer requesting the last record with a desired periodicity. Indeed, this record contains the only information which is subject to change and which is to be kept up-to-date. Since the amount of data to be transferred between server and browser due to such a refresh is minimum (a single record), the refresh periodicity can be very short, e.g. a few seconds, for instance 5 s. On the contrary, the whole page refresh (synchronous refresh) cannot be performed with a high frequency, given the huge data amount involved especially if a high number of clients are to be served. A synchronous refresh periodicity could be of the order of the minutes. The periodicities of both kinds of refresh are set in the configuration file.

An exemplary configuration file is shown in the following table 1.

**TABLE 1**

| |
|---|
| <?xml version="1.0" encoding="utf-8"?> |
| <ConfigurationRepository Version="13"> |
| <ConfigurationItems> |
| <ConfigurationSet KeyId="*"> |
| <ConfigurationItems> |
| <ConfigurationItem xsi:type="LineViewConfiguration" |
| Name="LineViewConfiguration" Version="13" |
| PollingTimeMs="5000" GanttsPerPage="3" |
| RefreshPageInSeconds="120" |
| EnableTimingNavigation="false"> |
| <TimingConfiguration TimeTemplate="ShiftShc"/> |
| <GanttOptimization> |
| <MinimumDurationProperty Name="MinimumDuration" |
| Value="00:05:00"/> |
| <TooltipForCompressedDataProperty Name="Tooltip" |
| Value="Compressed Data"/> |
| <CssForPlannedRecordProperty |
| Name="GanttCellCssForPlannedRecord" |
| Value="divGanttCell"/> |
| <CssForInducedRecordProperty |
| Name="GanttCellCssForInducedRecord" |
| Value="divGanttCell" T/> |
| </GanttOptimization> |
| </ConfigurationItem> |
| </ConfigurationItems> |
| </ConfigurationSet> |
| ...... |
| </ConfigurationItems> |
| </ConfigurationRepository> |

Section "ConfigurationItem xsi:type... ="false"" allows configuring a page containing the Gantt Control. More particularly:
- field "Ganttsperpage" allows setting the number of Gantts shown in the page (e.g. 3);
- field "RefreshPageInSeconds" allows setting the page refresh frequency (e.g. 120 s);
- field "PollingTimeMs" allows setting the asynchronous refresh frequency in milliseconds (e.g. 5000 ms).

Sections "TimingConfiguration TimeTemplate="ShiftShc"" and "GanttOptimization" allow defining the time ranges and additional parameters for the Gantt, respectively.

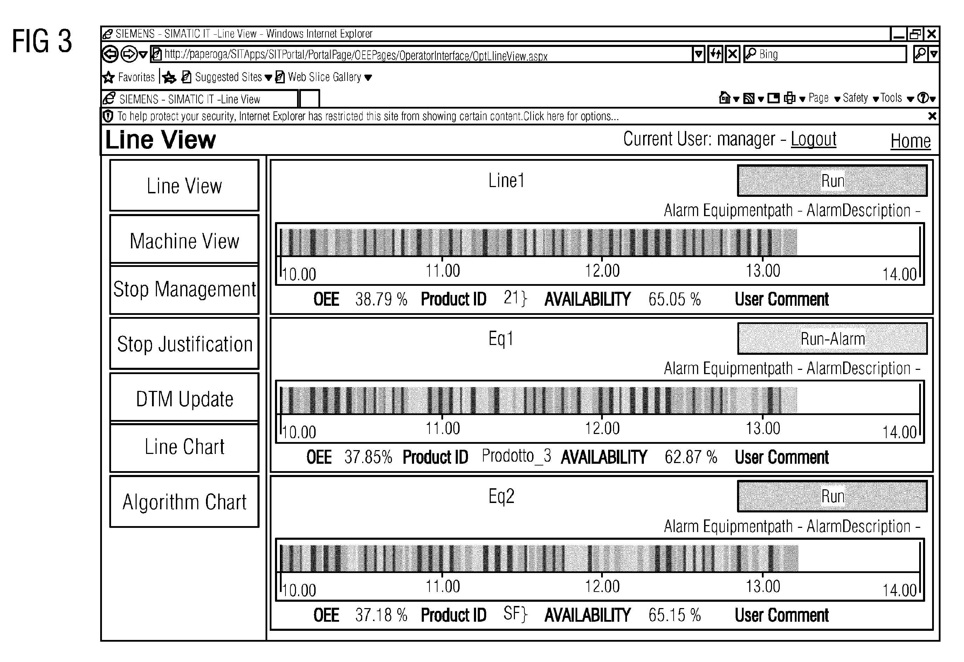

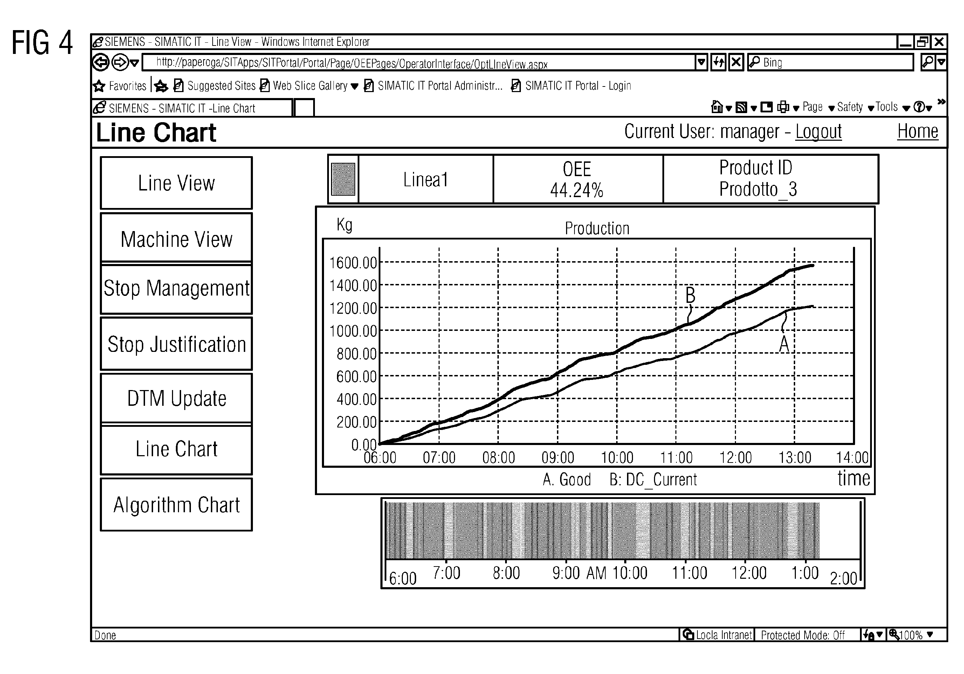

Figs. 3 and 4 show two examples of web pages rendered on browser 8 of a client 9 in SIMATIC IT system, namely the "Line View" web page displaying information on one or more production lines or pieces of equipment, and the "Line Chart" web page providing the operator with an overview of the production of a specific line or piece of equipment. Further pages can be displayed to a client, as shown by the selection pushbuttons on the left of the screen: yet, such further pages are not related with Gantt control and hence are not of interest for the invention.

The Line View page includes, in the example, three Gantt charts displaying the sequence of states of a line and two pieces of equipment during the current shift, together with their names (Line 1, Eq. 1, Eq. 2) and their current states (Run, Run with alarm, Run, respectively). Additionally, below the Gantt Charts, there are displayed the product being processed (Product ID) and the values of some algorithms related to the current shift, in this case OEE and availability. Further information to be displayed can be defined in the configuration file.

In turn, the Line Chart page includes the Gantt chart of Line 1 during the current shift, as well as a graph showing a performance considered as good (line A) and the items actually produced (line B).

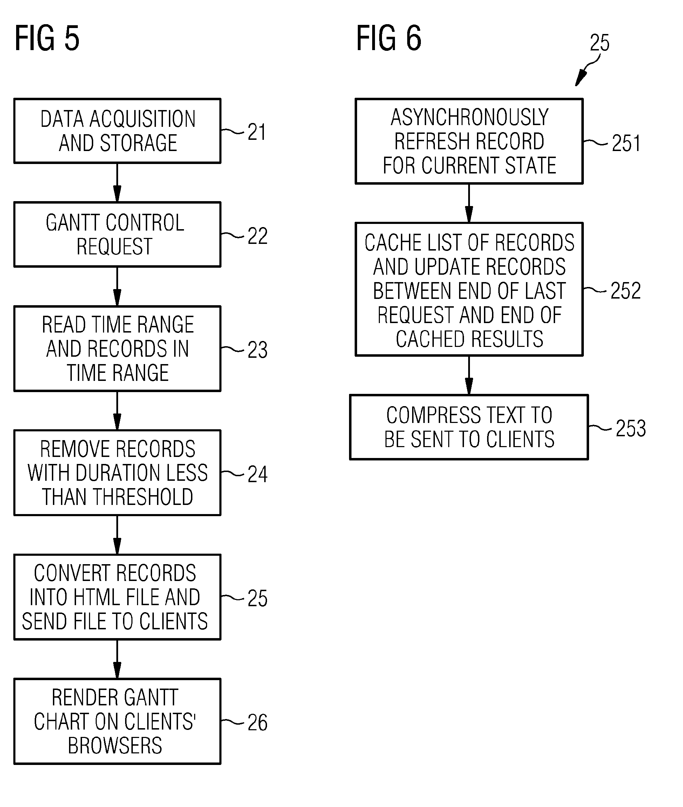

Figs. 5 and 6 summarize the method of the invention. Step 21 is the data acquisition by OEE server 5 and the data storage in database 3. Upon occurrence of a Gantt request (step 22), the time range and the relevant records are read from database 3 and supplied to web server 2 (step 23). After filtering depending on the duration (step 24), the HTML file is created and sendt to the client (step 25) for rendering (step 26). Substeps 251 - 253 in step 25 are respectively the asynchronous refresh of the last record, the caching of the list of downtimes and the updating of the records between the end time of a previous request and the end time of the caching, and the text compression before transmission to the clients.

In addition to the embodiments of the present invention described above, the skilled persons in the art will be able to arrive at a variety of other arrangements and steps which, even if not explicitly described in this document, nevertheless fall within the scope of the appended claims.

## Claims

1. A method of monitoring a manufacturing process via a web application (1), comprising the following steps:
- acquiring (21) from a plant (4) executing the process data about the state of the plant and/or parts thereof;
- converting said data into one or more Gantt charts (23 - 26) ;
the method being **characterized in that** said converting step includes the steps of:
- creating a HTML file (25) and sending it to browsers (8a...8n) of clients (9a...9n) for rendering (25); and
- asynchronously refreshing (251) a data record including information about a current state of the monitored plant (4) and/or part thereof.

2. The method according to claim 1, wherein said refreshing step (251) is performed in background through an asynchronous callback done by the browser (8a...8n) with a preset periodicity.

3. The method according to claim 1, wherein said preset periodicity is of the order of a few seconds.

4. The method according to any of the previous claims, wherein said converting step further includes caching (252) a list of the states acquired and updating only data records concerning states occurring between an end time of a last request for a Gantt chart and an end time of the cached results.

5. The method according to any of the previous claims, wherein said converting step further includes compressing (253) the text to be sent to the clients (9a...9n).

6. The method according to any of the previous claims, further comprising a configuration step for defining at least information items to be displayed jointly with the Gantt chart(s) and a time range to be covered by the Gantt chart(s).

7. The method according to claim 6, wherein said configuration step further includes defining a threshold for data record duration, and the converting step provides (24) for preventing records having duration shorter than the threshold from being sent to the clients (9a...9n).

8. A system for monitoring a manufacturing process, comprising:
- a web server (2) on which a web application (1) is running;
- browsers (8a...8n) running on clients (9a...9n) connected to the web server (3);
- an Overall Equipment Effectiveness server (5) acquiring, from a plant (4) executing the process, data about the state of the plant and/or parts thereof and supplying the web server (2) with said data when one or more clients (9a...9n) request the monitoring results; and
- a database (3) storing the state data;
the system being **characterized in that**:
- the database (3) further stores time information to be used for defining a time range of the monitoring;
- the system further comprises a time information management server (7) reading the time range from the database (3) when said one or more clients (9a...9n) request the monitoring results and supplying the web server (2) with said time range;
- the web application (1) and the web server (2) are arranged to convert the state data relevant to said time range into a HTML file and to send it to the clients' browsers (8a...8n) for rendering as one or more Gantt charts.

9. The system as claimed in claim 8, wherein the web application (1) and the web server (2) are further arranged to asynchronously refresh, in background, a data record including information about a current state of the monitored plant (4) and/or part thereof.

10. The system as claimed in claim 8 or 9, wherein the web server (2) further includes a cache memory for caching a list of the states acquired and updating only data records concerning states between an end time of a request for a Gantt chart and an end time of the cached results.

11. The system as claimed in any of claims 8 to 10, wherein the web server (2) further includes compressing means for compressing the text to be sent to the browser(s) (8a...8n).

12. The method according to any of the claims 1 to 7 **characterized in that** it is implemented in software.

13. A web application (1) running on a web server (2) for performing steps of the method according to any of the claims 1 to 7.
